# EUROPEAN PATENT APPLICATION

(11) **EP 3 567 445 A1**
(43) Date of publication of application: **13.11.2019**
(21) Application number: 19172650.4
(22) Date of filing: 03.05.2019
(51) Int. Cl.: G05D 1/00, G06K 9/00, G06Q 10/00

(54) **TRANSFERRING ANNOTATIONS TO IMAGES CAPTURED BY REMOTE VEHICLES BETWEEN DISPLAYS**

(30) Priority: 11.05.2018 US 201815977624
(71) Applicant: Honeywell International Inc., Morris Plains, NJ New Jersey 07950 (US)
(72) Inventor: BYE, Charles T., Morris Plains, NJ 07950 (US); EDARA, Thandava Krishna, Morris Plains, NJ 07950 (US)
(74) Representative: Houghton, Mark Phillip

(57) **Abstract**

The present application relates to an auxiliary device (150) for presenting images captured by a vehicle (100). The auxiliary device (150) includes a display (180), a communication module (170) configured to receive data signals (104) from the vehicle (100), and processing circuitry (160) configured to determine one or more images based on the data signals (104) received from the vehicle (100) and present, via the display (180), the one or more images. The auxiliary device (150) also includes an input device (182) configured to receive user inputs. The processing circuitry (160) is further configured to determine a set of annotations to the one or more images based on the user inputs and cause the communication module (170) to transmit the set of annotations to a primary device (110) that remotely controls movements of the vehicle (100).

## Description

### TECHNICAL FIELD

This disclosure relates to systems for inspection of structures.

### BACKGROUND

Vehicles such as unmanned aerial vehicles (UAVs) have the potential to dramatically improve the process of inspecting various inspection targets, such as bridges, electrical transmission towers, agricultural fields, buildings, antennas, and so on. For instance, a UAV may be able to access areas that would be difficult for a person to access, such as the lower surfaces of bridges, or areas close to electrical transmission towers where it would be difficult to safely fly manned aerial vehicles.

### SUMMARY

In general, this disclosure relates to techniques that improve computing systems for performing inspection services. For example, techniques of this disclosure may improve the effectiveness of inspections using UAVs. The techniques allow two remote users to create and exchange annotations on devices that present images received from a vehicle.

For example, a primary device is configured to remotely control movements of the vehicle. The primary device and an auxiliary device may receive data signals from the vehicle and present images to a user based on the data signals received from the vehicle. The primary device may also receive data signals indicating annotations from the auxiliary device and present the images with the annotations based on the data signals received from the auxiliary device.

In some examples, a primary device for remotely controlling movements of a vehicle includes a display and a communication module configured to transmit control signals to the vehicle to control the movements of the vehicle, receive data signals from the vehicle, and receive data signals from an auxiliary device. In some examples, the primary device also includes processing circuitry configured to determine one or more images based on the data signals received from the vehicle, determine a set of annotations to the one or more images based on the data signals received from the auxiliary device, and present, via the display, the one or more images and the set of annotations.

In some examples, an auxiliary device for presenting images captured by a vehicle includes a display, a communication module configured to receive data signals from the vehicle, and processing circuitry configured to determine one or more images based on the data signals received from the vehicle and present, via the display, the one or more images. The auxiliary device also includes an input device configured to receive user inputs. The processing circuitry is further configured to determine a set of annotations to the one or more images based on the user inputs and cause the communication module to transmit the set of annotations to a primary device that remotely controls movements of the vehicle.

In some examples, a method for remotely controlling movements of a vehicle includes transmitting, by processing circuitry of a device and via a communication module of the device, control signals to the vehicle to control the movements of the vehicle. The method also includes receiving, by the processing circuitry and from the communication module, data signals from the vehicle and data signals from an auxiliary device. The method further includes determining, by the processing circuitry, one or more images based on the data signals received from the vehicle and determining, by the processing circuitry, a set of annotations to the one or more images based on the data signals received from the auxiliary device. The method includes presenting, by the processing circuitry and via a display of the device, the one or more images and the set of annotations.

In some examples, a method for presenting images captured by a vehicle includes receiving, by processing circuitry of an auxiliary device and from a communication module of the auxiliary device, data signals from the vehicle. The method further includes determining, by the processing circuitry, one or more images based on the data signals received from the vehicle and presenting, by the processing circuitry and via a display of the auxiliary device, the one or more images. The method also includes receiving, by the processing circuitry and from an input device of the auxiliary device, user inputs and determining, by the processing circuitry, a set of annotations to the one or more images based on the user inputs. The method includes causing, by the processing circuitry, the communication module to transmit the set of annotations to a primary device that remotely controls movements of the vehicle.

The details of one or more examples of the disclosure are set forth in the accompanying drawings and the description below. Other features, objects, and advantages will be apparent from the description, drawings, and claims.

### BRIEF DESCRIPTION OF THE DRAWINGS

FIG. 1 is a conceptual block diagram of an example system including a vehicle, a primary device, and an auxiliary device.
FIG. 2 shows an example system for performing an inspection, which may be configured to implement the techniques of this disclosure.
FIG. 3 is a block diagram illustrating example components of a vehicle that may be used to implement techniques of this disclosure.
FIG. 4 is a block diagram illustrating example components of an inspection management system, in accordance with a technique of this disclosure.
FIGS. 5A-5E illustrate example annotations on images depicting an electrical transmission tower.
FIGS. 6 and 7 are flow diagrams illustrating the transmission of annotations between a primary device and an auxiliary device, in accordance with a technique of this disclosure.

### DETAILED DESCRIPTION

In some examples where a vehicle such as an unmanned aerial vehicle (UAV) is being used for an inspection, the user of a primary device may be the UAV operator controlling the flight of the UAV, and the user of an auxiliary device may be an expert in the subject matter of the inspection. The devices, systems, and techniques of this disclosure may allow the user of the auxiliary device, e.g., the subject-matter expert, to send annotations from the auxiliary device to the primary device, which is used by, e.g., the vehicle operator, in real time. As a result, the vehicle operator, through the primary device, may control the vehicle and the camera onboard the vehicle to capture photographs and/or video as instructed by the subject-matter expert, which may improve the effectiveness and completeness of the inspection. The transmission of annotations between the devices during the inspection can, for example, reduce the likelihood of a second inspection being necessary, or otherwise improve the likelihood of the vehicle's mission being successfully completed.

As an example, the user of a primary device (e.g., a ground control station and/or a tablet) may control a UAV to perform an inspection of a bridge. The UAV and/or the primary device has the capability to transmit data (e.g., images) to a remote or auxiliary device that includes a display for a second user. The second user viewing the display on the auxiliary device may be an expert on the structural engineering of bridges. Thus, the two users may have divided expertise. The vehicle operator may know how to operate the vehicle and capture images with the onboard camera, but the vehicle operator may not understand the subject matter of the inspection (e.g., the structural engineering of bridges). The subject-matter expert understands the structural engineering of bridges but may not know how to operate the vehicle and capture images with high proficiency.

The UAV may capture images (e.g., still images or video) during the inspection of the bridge and transmit data signals to the primary and auxiliary devices. The subject-matter expert can create annotations on images presented by the auxiliary device. The user of the auxiliary device may seek to communicate graphically to the first user (e.g., the vehicle operator) to give directions related to the positioning or zoom of the camera on the UAV or other actions. Communicating by voice is cumbersome and inefficient and may detract from the first user's situational awareness. Moreover, the user of the primary device and the user of the secondary device may be at different locations and may not speak the same language.

In accordance with the techniques of this disclosure, the auxiliary device can transmit the annotations (e.g., text and graphical information) created by the second user to the primary device for presentation with images on the primary device. Thus, the vehicle operator can view the annotations from the subject-matter expert during the inspection. The devices may engage in two-way communication such that both users can create annotations on their device for communication to and presentation by the other device. The vehicle operator may create annotations on the primary device and communicate these annotations to the auxiliary device.

By sending annotations from the auxiliary device to the primary device, the subject-matter expert can tell the vehicle operator which areas of the bridge to further inspect. For example, the subject-matter expert can circle, highlight, mark, and/or zoom in on locations and areas of the bridge where the subject-matter expert would like additional photographs. If the subject-matter expert sees a possible hazard (e.g., a crack, a fault, etc.) in a photograph of the bridge, the subject-matter expert can annotate a portion of an image showing the possible hazard. Thus, the systems, devices, and techniques of this disclosure may reduce the chances that a vehicle operator will miss important inspection areas because a subject-matter expert, following along on an auxiliary device, can send annotations to the primary device in real time. In other examples, the subject-matter expert may be able to annotate an image to indicated whether then image is acceptable or unacceptable. In cases where images are acceptable, the vehicle operator may move the vehicle to a new location to continue with the inspection. In cases where images are not acceptable, the vehicle operator may keep the vehicle at the current location and capture additional images until the subject matter indicates acceptable images have been captured.

The vehicle operator and the subject-matter expert may communicate through their devices in real-time or near real-time to improve the efficiency of the inspection, as compared to other techniques for communicating during an inspection. For example, if the vehicle operator and the subject-matter expert communicate about the inspection using audio only (e.g., using mobile phones), the subject-matter expert may have more difficulty telling the vehicle operator where to capture images, as compared to transmitting annotations from an auxiliary device to a primary device. As another example, it may not always be feasible or convenient for the vehicle operator and the subject-matter expert to be present at the same location during the inspection or to view the same display during the inspection.

The systems, devices, and techniques of this disclosure may allow the vehicle operator and the subject-matter expert to view separate displays and communicate during the inspection. Furthermore, the systems, devices, and techniques of this disclosure may reduce the likelihood that a second inspection is necessary to capture additional images because the subject-matter expert can communicate locations for additional images through the auxiliary device to the primary device. As compared to storing the annotations to a computing system for later viewing, transmitting annotations as the annotations are created (or shortly thereafter) may reduce the time needed to complete an inspection process. Thus, the techniques of this disclosure may provide a technical solution to the problem of communicating during an inspection and/or during any other use of a vehicle to capture images.

Without the systems, devices, and techniques of this disclosure, a vehicle operator with a primary device may have to perform a solo inspection and capture images. The subject-matter expert can then view the images at a later time and make annotations to indicate additional images to capture during a subsequent inspection. However, conducting two inspections increases the cost and time for the inspection process. In contrast, the techniques of this disclosure may allow the vehicle operator and the subject-matter expert to conduct a single inspection using two devices, even when the vehicle operator and the subject-matter expert are not present at the same location. The two devices may allow communication between the vehicle operator and the subject-matter expert in real-time or nearly real-time such that the subject-matter expert can instruct the vehicle operator to capture images of particular locations and areas before the inspection is complete. The systems, devices, and techniques of this disclosure may significantly increase the efficiency of communication between the user of the primary device and the user of the auxiliary device.

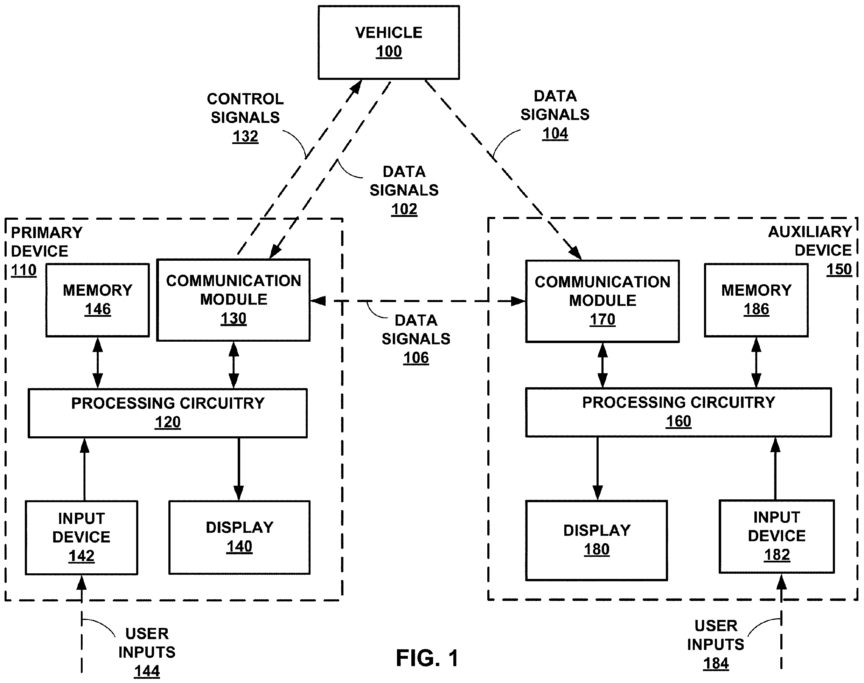

FIG. 1 is a conceptual block diagram of an example system including vehicle 100, primary device 110, and auxiliary device 150. Primary device 110 can be the main input/output device through which a user (e.g., a vehicle operator) interacts with vehicle 100 to control the movements of vehicle 100 via control signals 132, and includes processing circuitry 120, communication module 130, display 140, input device 142, and memory 146. Auxiliary device 150 is a secondary device that receives data signals 104 from vehicle 100 and communicates with primary device 110 via data signals 106. Auxiliary device 150 includes processing circuitry 160, communication module 170, display 180, input device 182, and memory 186.

Vehicle 100 is configured to receive control signals 132 from primary device 110. Vehicle 100 may include a motor and/or an engine to cause vehicle 100 to move based on control signals 132 received from primary device 110. Vehicle 100 is described herein as a UAV, but vehicle 100 may be any manned or unmanned aircraft, land vehicle, marine vehicle, space vehicle, and/or any other type of vehicle.

Vehicle 100 can be any type of UAV including, but not limited to, a quadcopter, a rotorcraft, a fixed wing aircraft, compound aircraft such as tilt-rotor, X2 and X3, an aerostat, or any other such type of UAV including all vertical take-off and landing (VTOL), tail-sitter, etc. Vehicle 100 may be configured to fly with various degrees of autonomy. In some examples, vehicle 100 may be under the constant, or near constant, control of a user of primary device 110. In other examples, primary device 110 may deliver a mission, including a flight plan, to vehicle 100, and onboard processing circuitry of vehicle 100 may be configured to execute the mission, with little or no additional user input. In some examples, vehicle 100 may use radar and/or LIDAR for collision avoidance.

Although the techniques of this disclosure are not limited to any particular type of UAV, vehicle 100 may, for example, be a relatively small, low altitude, and low-speed UAV, where in this context, small corresponds to under one hundred pounds, low altitude corresponds to operating altitudes less than 3000 feet above ground, and low air speed corresponds to air speeds less than 250 knots. Furthermore, it is contemplated that vehicle 100 may have hovering capabilities, meaning vehicle 100 may have the capability of remaining at an approximately constant location in the air.

Vehicle 100 may include onboard processing circuitry and a camera. The camera onboard vehicle 100 can capture images (e.g., photographs or video) autonomously and/or based on control signals 132. Vehicle 100 may then transmit the images via data signals 102 and 104 to devices 110 and 150.

Primary device 110 is configured to control the movements of vehicle 100 via control signals 132. In some examples, primary device 110 and/or auxiliary device 150 includes or is part of a general-purpose device such as a personal digital assistant (PDA), a laptop or desktop computer, a tablet computer, a cellular or satellite radio telephone, a mobile device such as a mobile phone (e.g., a smartphone), and/or another such device. In examples where device 110 is a general-purpose device, primary device 110 (e.g., memory 146) may be loaded with and configured to execute software designed to control vehicle 100. In examples where auxiliary device 150 is a general-purpose device, auxiliary device 150 (e.g., memory 186) may be loaded with and configured to execute software designed to receive data signals 104 from vehicle 100 and exchange data signals 106 with primary device 110. The software stored to memory 146 and 186, when executed, may cause processing circuitry 120 and 160 to determine annotations based on user inputs 144 and 184 and transmit the annotations as data signals 106. The software stored to memory 146 and 186, when executed, may cause processing circuitry 120 and 160 to determine annotations based on data signals 106 received from the other device and present the annotations via displays 140 and 180.

In other examples, primary device 110 is a special-purpose device designed specifically for use in controlling vehicle 100, receiving data signals 102 from vehicle 100, exchanging data signals 106 with auxiliary device 150, presenting images via display 140, and receiving user inputs 144. Auxiliary device 150 may also be a special-purpose device designed specifically for use in receiving data signals 104 from vehicle 100, exchanging data signals 106 with primary device 110, presenting images via display 180, and receiving user inputs 184. Primary device 110 includes a flight control and navigation system for controlling the movements of vehicle 100. Device 110 and/or 150 may include a handheld device and/or be a part of a ground control base station.

Processing circuitry 120, as well as other processors, processing circuitry (e.g., processing circuitry 160), controllers, control circuitry, and the like, described herein, may include one or more processors. Processing circuitry 120 and/or 160 may include any combination of integrated circuitry, discrete logic circuity, analog circuitry, such as one or more microprocessors, digital signal processors (DSPs), application specific integrated circuits (ASICs), or field-programmable gate arrays (FPGAs). In some examples, processing circuitry 120 and/or 160 may include multiple components, such as any combination of one or more microprocessors, one or more DSPs, one or more ASICs, or one or more FPGAs, as well as other discrete or integrated logic circuitry, and/or analog circuitry. Although FIG. 1 depicts processing circuitry 120 and 160 as directly connected to communication module 130 and 170, display 140 and 180, input device 142 and 182, memory 146 and 186, any of the components of devices 110 or 150 may directly connect to any other component. For example, memory 146 may be configured to store data signals 102 or 106 received directly from communication module 130 or store user inputs 144 received directly from input device 142.

Communication module 130 is configured to communicate via signals 102, 106, and 132 with vehicle 100 and auxiliary device 150. Communication module 170 is configured to communicate via data signals 104 and 106 with vehicle 100 and primary device 110. In some examples, the link(s) between communication module 130, communication module 170, and/or vehicle 100 may be a network-based link including one or more intermediary devices such as gateways, routers, switches, repeaters, or other such network devices. Communication module 130 and/or 170 may include any wired connection or wireless connection with vehicle 100 and/or devices 110 and 150. For example, a wired connection may include an ethernet connection, a coaxial cable, universal serial bus (USB), RS-232, and/or any other suitable protocol. A wireless connection may include Wi-Fi, Bluetooth, radio frequency wireless, ZigBee, a proprietary protocol, and/or any other suitable protocol. Communication module 130 and/or 170 may include a wireless receiver and/or a wireless transmitter configured to transmit or receive signals 102, 104, 106, and 132.

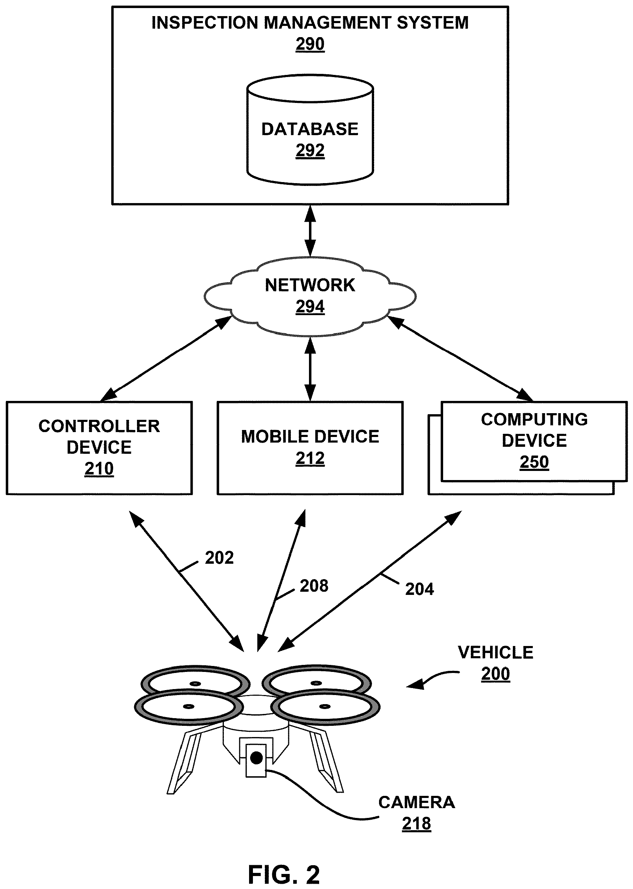

Communication module 130 is configured to transmit control signals 132 to vehicle 100 to control the movements of vehicle 100. Control signals 132 may indicate intended maneuvers for vehicle 100. Control signals 132 may also cause a camera onboard vehicle 100 to capture images at particular times, locations, and angles. Communication modules 130 and 170 are also configured to receive data signals 102 and 104 from vehicle 100 indicating images captured by vehicle 100 and/or other data from vehicle 100. Communication modules 130 and 170 are also configured to transmit and receive data signals 106 via a two-way link between devices 110 and 150, where data signals 106 may indicate annotations determined by processing circuitry 120 and/or 160. The communication link between communication modules 130 and 170 may include multiple transmission mediums, including the use of cloud servers and other databases (see inspection management system 290 shown in FIG. 2). Communication modules 130 and 170 may be configured to transmit and receive scrambled and/or encrypted messages because security may be important for signals 102, 104, 106, and 132.

Displays 140 and 180 are configured to present images captured by vehicle 100 to users of devices 110 and 150. In addition, displays 140 and 180 may also present annotations determined by processing circuitry 120 and/or 160. Displays 140 and 180 may include a monitor, cathode ray tube display, a flat panel display such as a liquid crystal (LCD) display, a plasma display, a light emitting diode (LED) display, and/or any other suitable display. Displays 140 and 180 may be part of a personal digital assistant, mobile phone, tablet computer, laptop computer, any other suitable computing device, or any combination thereof, with a built-in display or a separate display. Devices 110 and 150 may also include means for projecting audio to a user, such as speaker(s).

Input devices 142 and 182 are configured to receive user inputs 144 and 184, which may indicate maneuvers for vehicle 100 (in the case of input device 142), annotations to images presented by displays 140 and 180, and/or any other inputs. Input devices 142 and 182 may consist of a physical interface and/or a digital interface. A physical input device may include, for example, a touchscreen, touchpad, joystick, button, lever, trigger, steering wheel, mouse, keyboard, and/or other input device. In some examples, input devices 142 and 182 includes a virtual input device such as a screen displaying any number of digital structures, such as a button, slider, menu item, or other digital structure.

User inputs 144 may indicate directions or locations for movement by vehicle 100. User inputs 144 and 184 may indicate locations of images to capture for the camera onboard vehicle 100. User inputs 144 and 184 may include markings, highlights, text, levels of zoom, lines, arrows, circles and/or any other annotations on images presented by display 140 and 180. User inputs 144 and 184 may include text, highlighting, drawings, and/or voice notes. User inputs 144 and 184 may also include metadata such as text, filenames, or notes. User inputs 144 and 184 can include touchscreen inputs, keyboard/keypad inputs, mouse inputs, etc.

Memory 146 and 186 may be configured to store images, annotations, control signals 132, and/or data signals 102, 104, and 106, for example. In some examples, memory 146 and 186 may store program instructions, which may include one or more program modules, which are executable by processing circuitry 120 and/or 160. When executed by processing circuitry 120, such program instructions may cause processing circuitry 120 and/or 160 to provide the functionality ascribed to processing circuitry 120 and/or 160 herein. The program instructions may be embodied in software, firmware, and/or RAMware. Memory 146 and 186 may include any volatile, non-volatile, magnetic, optical, or electrical media, such as a random access memory (RAM), read-only memory (ROM), non-volatile RAM (NVRAM), electrically-erasable programmable ROM (EEPROM), flash memory, or any other digital media. Examples of volatile memories include RAM, dynamic random access memories (DRAM), static random access memories (SRAM), integrated random access memory (IRAM), thyristor random access memory (TRAM), zero-capacitor random access memory (ZRAM), or any other type of suitable volatile memory. Examples of non-volatile memory include optical disk drives, magnetic disk drives, flash memory, ROM, forms of electrically programmable memories (EPROM) or electrically EEPROM, or any other such type of non-volatile memory.

In accordance with the techniques of this disclosure, processing circuitry 120 and 160 are configured to determine one or more images based on data signals 102 and 104 received by communication module 130 and 170 from vehicle 100. Processing circuitry 120 and 160 are also configured to present, via displays 140 and 180, the one or more images. A vehicle operator and a subject-matter expert can view the one or more images presented on displays 140 and 180 while the vehicle operator, through primary device 110, controls the movements of vehicle 100 and the capturing of images by vehicle 100.

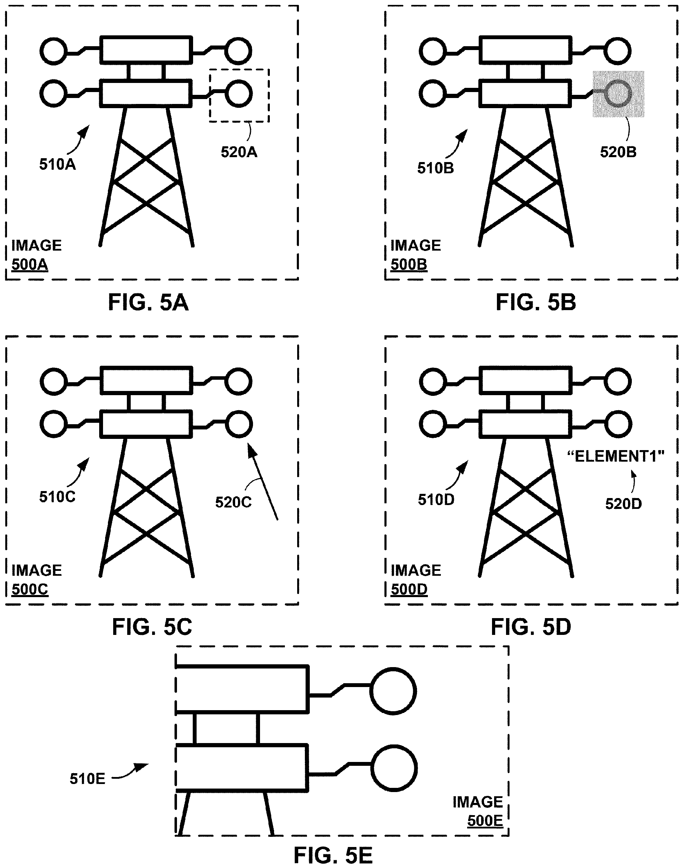

Processing circuitry 160 may be configured to determine a set of annotations (e.g., "an auxiliary set of annotations") to the one or more images based on user inputs 184 received by input device 182. The user of auxiliary device 150 may create the auxiliary set of annotations while the user views the one or more presented on display 180. The auxiliary set of annotations may indicate locations for additional images to capture during an inspection (see, e.g., FIGS. 5A-5E). Processing circuitry 160 is configured to cause communication module 170 to transmit data signals 106 indicating the auxiliary set of annotations to primary device 110.

Data signals 106 may indicate an annotation in least in part by indicating the one or more images associated with the annotation. Processing circuitry 120 and/or 160 may store an annotation in an Extensible Markup Language (XML) file that is associated with the one or more images. An annotation may be associated with an image using the filename of the image, a timestamp of the image, or a frame number of the image. In some examples, processing circuitry 120 and/or 160 may store the annotations in a text file or any other suitable file format. To present an image and an annotation, processing circuitry 120 and/or 160 may be configured to associate the XML file with the associated image.

Alternatively, processing circuitry 120 and/or 160 may be configured to store the annotations in the same location as the image (i.e., the file location containing the image). The annotations may be stored in the file containing the image, where the annotations may be a separate layer from the image. In some examples, the annotations may include markings, highlights, text, scribbling, etc. on an image, and processing circuitry 120 and/or 160 may be configured to store the annotations in an image file as a separate layer from the image. Processing circuitry 120 and/or 160 may then be configured to transfer or apply the annotations from the file location of the image to the file location of the image or into an associated file location (e.g., an XML file). Processing circuitry 120 and/or 160 can transmit the annotation file, alone or with the image file, via communication module 130 and/or 170 as data signal 106.

Processing circuitry 120 is configured to determine the auxiliary set of annotations based on data signals 106 received by communication module 130 from communication module 170 of auxiliary device 150. Processing circuitry 120 may be configured to present, via display 140, the set of annotations to the one or more images. The vehicle operator may view the auxiliary set of annotations and control vehicle 100 to move and capture images based on the auxiliary set of annotations.

In some examples, processing circuitry 120 is also configured to determine another set of annotations (e.g., "a primary set of annotations") to the one or more images based on user inputs 144 received by input device 142. The vehicle operator may create the primary set of annotations by providing user inputs 144 to input device 142, e.g., in order to indicate locations for consideration by the user of auxiliary device 150. Processing circuitry 120 may then be configured to cause communication module 130 to transmit the set of primary annotations as data signals 106 to communication module 170 of auxiliary device 150.

Processing circuitry 160 is configured to determine the primary set of annotations based on data signals 106 received by communication module 170 from communication module 130. Processing circuitry 160 may be configured to present, via display 180, the one or more images along with the primary set of annotations. In some examples, a user of auxiliary device 150 may control, via user inputs 184, the camera onboard vehicle 100 or other actions by vehicle 100.

The systems, devices, and techniques of this disclosure may allow annotations to be echoed thereby enabling auxiliary device 150 to communicate with primary device 110 and any other devices in the system. Device 110 and/or 150 may "echo" a communication by transmitting a copy of the communication. The system may include more devices than the two devices depicted in FIG. 1. Echoing to multiple pilot and remote displays. In some examples, device 110 or 150 may communicate an alert to another device that is on-site or remote from the site where primary device 110 is located. Devices 110 and 150 may be configured to echo or accept information received by communication module 130 or 170. A receiving device may be configured to automatically echo particular information to the transmitting device or to a third device.

FIG. 2 shows an example system for performing an inspection, which may be configured to implement the techniques of this disclosure. In the example of FIG. 2, the system includes vehicle 200, a controller device 210, a mobile device 212, an inspection management system 290, one or more computing devices 250, and a network 294. Vehicle 200 is an example of vehicle 100 shown in FIG. 1, controller device 210 is an example of primary device 110 shown in FIG. 1, and computing devices 250 are examples of auxiliary device 150 shown in FIG. 1. Mobile device 212 is an example of either of devices 110 and 150 shown in FIG. 1.

A vehicle operator may use controller device 210 to control a flight path of vehicle 200. An inspector may use mobile device 212 to control sensors, such as cameras, mounted on vehicle 200 to perform an aerial inspection of an inspection target. Inspection management system 290 provides resources to support an end-to-end workflow for UAV-based aerial inspections. Users may use computing devices 250 to interact with devices 210 and 212 and inspection management system 290. Network 294 facilitates communication among controller device 210, mobile device 212, inspection management system 290, and computing devices 250. Devices 210, 212, and 250 may directly communicate with each other, or devices 210, 212, and 250 may communicate through intermediate devices, such as gateways, routers, switches, repeaters, or other such network devices.

Although shown as separate devices in FIG. 2, in other examples, the functionality of controller device 210 and mobile device 212 may be performed by a common device. Furthermore, in other examples, vehicle 200 is sufficiently autonomous to avoid the need to have a pilot use a controller device, such as controller device 210, to navigate vehicle 200 along a flight path. In some examples, devices 210, 212, and/or 250 each comprises a general-purpose device such as a laptop or desktop computer, a tablet computer, a cellular or satellite radio telephone, a smart phone, or another such device. Any or all of devices 210, 212, and/or 250 may comprise a special-purpose device designed specifically for use in controlling vehicle 200, receiving data signals 202, 204, and/or 208 from vehicle 200, exchanging data signals with other devices, presenting images via a display, and/or receiving user inputs. Any or all of devices 210, 212, and/or 250 may include a handheld device and/or be a part of a ground control base station.

Devices 210, 212, and 250 communicate with vehicle 200 via communication links 202, 208, and 204, respectively. In some examples, vehicle 200 is configured to stream data to mobile device 212 in real-time or near real time via, for example, a wireless communication link 208. Mobile device 212 may also provide commands to vehicle 200 via communication link 208. Communication link 208 may be implemented in a manner similar to communication link 202. Communication links 202, 204, and 208 may allow transmission of data signals and control signals, such as signals 102, 104, and 132 shown in FIG. 1. For example, a user of one of devices 210, 212, and 250 can create annotations via user inputs, and the respective device may communicate the annotations to the other of devices 210, 212, and 250.

Inspection management system 290 comprises one or more computing devices. For example, inspection management system 290 may comprise one or more computing devices, such as a laptop or desktop computer, a tablet computer, a server device, or another such device. Inspection management system 290 may be loaded with and configured to execute software designed to provide resources to support an end-to-end workflow for UAV-based aerial inspections. In some examples, controller device 210 communicates with inspection management system 290 to obtain and send data, such as flight plan data. Devices 210, 212, and 250 may communicate with inspection management system 290 to retrieve and store data.

One or more cameras 218 are mounted on vehicle 200. Cameras 218 may include one or more cameras capable of capturing images of visible light. In some examples, cameras 294 may include one or more cameras capable of capturing images of infrared radiation, or other types of cameras or sensors. Vehicle 200 may perform aerial inspections of various types of inspection targets. For example, an inspection target may be a building, a dam, a solar panel array, a wind turbine, a monument, a bridge, a levee, a seawall, a pier, an antenna, a volcano, a pump station, an agricultural area, an electrical transmission tower, or another type of artificial or natural structure.

In some examples, vehicle 200 saves the captured images on a Secure Digital (SD) card or other type of memory card, and additionally or alternatively may also transfer on-line to a cloud-based web server using 3G, 4G, 5G, Narrow Band-Internet of Things (NBIOT), or another wireless type of transmission technologies. In some examples, vehicle 200 is equipped with one or more differential Global Navigation Satellite System (GNSS) devices to assist vehicle 200 navigate to the image capture locations. For instance, vehicle 200 may be equipped for real-time kinematics, which is a type of differential GNSS that may provide high positioning performance for vehicle 200 in the vicinity of a base station. In some examples, accuracy of the GNSS devices may be within one centimeter.

In the example of FIG. 2, inspection management system 290 includes a database 292. Database 292 may store information related to inspection projects. Database 292 may be implemented in various ways. For example, database 292 may comprise one or more relational databases, object-oriented databases, comma-separated value (CSV) files, or other types of databases.

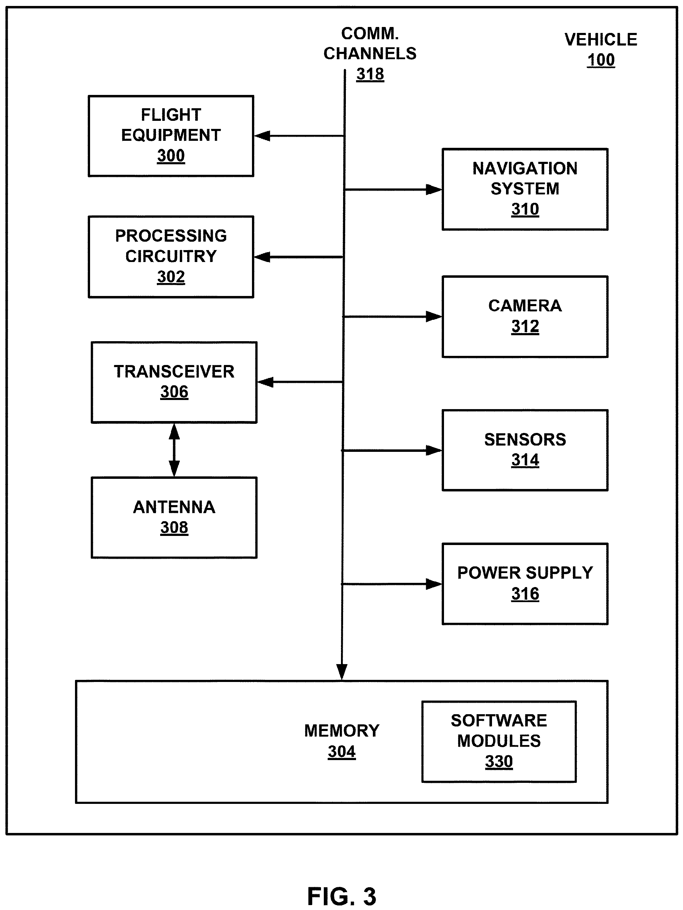

FIG. 3 shows an example illustration of vehicle 100. Vehicle 100 includes flight equipment 300, processing circuitry 302, memory 304, transceiver 306, antenna 308, navigation system 310, camera 312, sensor 314, and power supply 316. Camera 312 is an example of one or more cameras 218 shown in FIG. 2.

Communication channels 318 interconnect each of flight equipment 300, processing circuitry 302, memory 304, transceiver 306, antenna 308, navigation system 310, camera 312, sensor 314, and power supply 316 for inter-component communications (physically, communicatively, and/or operatively). In some examples, communication channels 318 include a system bus, a network connection, an inter-process communication data structure, or any other method for communicating data, including various types of wireless communication technologies. Power supply 316 may provide electrical energy to each of the other components of vehicle 100. In some examples, power supply 316 is a battery.

Processing circuitry 302 is intended to represent all processing circuitry and all processing capabilities of vehicle 100. Processing circuitry 302 may, for example, include one or more DSPs, general purpose microprocessors, integrated circuits (ICs) or a set of ICs (e.g., a chip set), ASICs, FPGAs, or other equivalent integrated or discrete logic circuitry.

Memory 304 is intended to represent all of the various memory devices within vehicle 100. Memory 304 constitutes a computer-readable storage medium and may take the form of either a volatile memory that does not maintain stored contents once vehicle 100 is turned off or a non-volatile memory that stores contents for longer periods of time, including periods of time when vehicle 100 is an unpowered state.

The functionality of vehicle 100 is implemented by hardware, software, firmware, or combinations thereof. Memory 304 may store software modules 330 and/or firmware that include sets of instructions. Processing circuitry 302 and, other hardware components of vehicle 100, may execute the instructions of software modules 330 and/or firmware to perform the techniques of this disclosure.

Transceiver 306 is configured to send and receive data (e.g., signals 102, 104, and 132 shown in FIG. 1) using antenna 308 via one or more communication links, such as communication links 202, 204, and 208 shown in FIG. 2. Transceiver 306 may send and receive data according to any of the wireless communication protocols described elsewhere in this disclosure. For example, transceiver 306 may be configured to receive navigation instructions, such as control signals 132 shown in FIG. 1. Additionally, transceiver 306 may be configured to send images and other data to a computing system, such as devices 110 and 150 shown in FIG. 1, or devices 210, 212, and 250 shown in FIG. 2.

Navigation system 310 controls a flight path of vehicle 100 based on control signals received from a primary device, such as devices 110, 210, or 212 shown in FIGS. 1 and 2. In some examples, navigation system 310 controls the flight path of vehicle 100 based on data stored in memory 304. For example, navigation system 310 may output signals to flight equipment 300 to instruct vehicle 100 to fly to predetermined image capture locations, to land, or to otherwise navigate to locations along a flight path of vehicle 100.

Camera 312 may be configured to capture infrared images and/or visible light images based on control signals received from a primary device, such as devices 110, 210, or 212 shown in FIGS. 1 and 2. In some examples, the same camera captures both infrared images and visible light images. In other examples, vehicle 100 has separate cameras to capture infrared images and visible light images. Processing circuitry 302 may be configured to control camera 312.

Sensor 314 are intended to represent all the various sensors included in vehicle 100. Vehicle 100 may, for example, include one or more sensors used for flight management, such as accelerometers, gyroscopes, magnetometers, barometers, GNSS sensors, tilt sensors, inertial measurement sensors, speed sensors, and others.

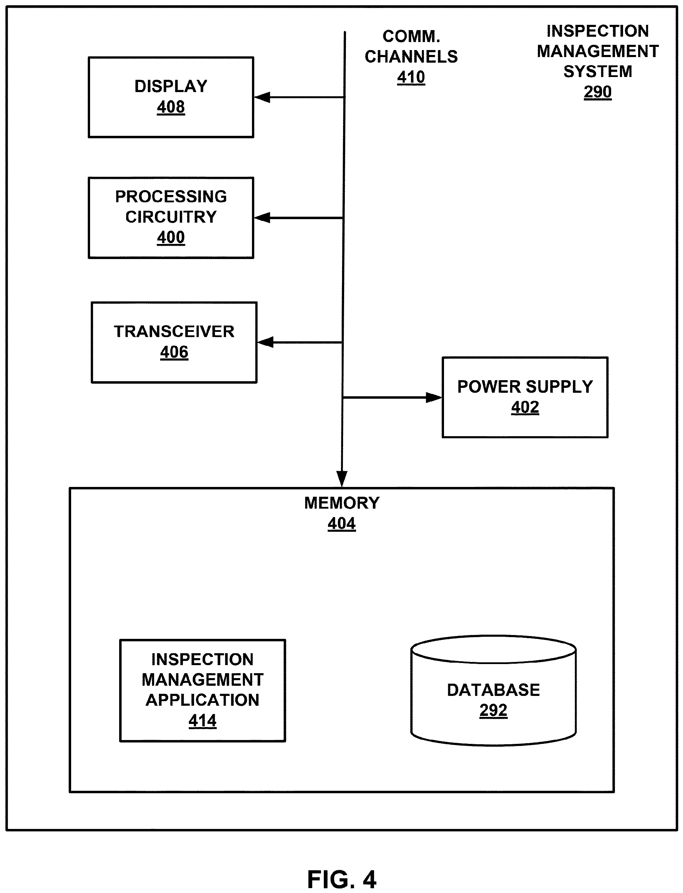

FIG. 4 is a block diagram illustrating example components of inspection management system 290, in accordance with one or more techniques of this disclosure. In the example of FIG. 4, inspection management system 290 includes processing circuitry 400, power supply 402, memory 404, transceiver 406, and display 408. Communication channels 410 interconnect processing circuitry 400, power supply 402, memory 404, transceiver 406, and display 408. Power supply 402 provides power to processing circuits 400, memory 404, transceiver 406 and display 408. processing circuitry 400 and memory 404 and may be implemented in a manner similar to processing circuitry 110, 160, and 302 and memory 146, 186, and 304 described above with respect to FIGS. 1 and 3.

Transceiver 406 may comprise a network card, such as an Ethernet adaptor, wireless interface, or other device for sending and receiving data with other computing devices. In some examples, each of devices 110, 150, 210, 212, and 250 is configured to communicate directly with the others of devices 110, 150, 210, 212, and 250, rather than communicating through inspection management system 290. For example, communication module 130 shown in FIG. 1 may transmit data signals 106 directly to communication module 170 shown in FIG. 1, rather than transmitting to communication module 170 through inspection management system 290.

Display 408 may comprise various types of displays for outputting data, such as liquid crystal displays, plasma displays, light emitting diode (LED) displays, and so on. In other examples, inspection management system 290 may include more, fewer, or different components. For instance, in some examples, inspection management system 290 does not include display 408.

In the example of FIG. 4, memory 404 stores database 292 and an inspection management application 414. Database 292 stores data associated with inspection projects, as described elsewhere in this disclosure. For instance, database 292 may comprise tables and data associated with inspection tasks, inspectors, pilots, images, video, and so on. Inspection management application 414 may comprise software instructions that, when executed by processing circuits 400, cause inspection management system 290 to perform the inspection management functions described in this disclosure.

FIGS. 5A-5E illustrate example annotations 520A-520D on images 500A-500E depicting an electrical transmission tower 510A-510E. Each of images 500A-500E includes a different type of annotation (e.g., marking, highlighting, arrow, text, zoom-in, etc.) to indicate a location on the respective image. A user may create one of annotations 520A-520D to indicate a location for a vehicle operator to cause a vehicle to capture additional images.

As shown in FIGS. 5A-5E, each of electrical transmission towers 510A-510E includes a lower support body, an upper cage, and four cross arms. Each of annotations 520A-520D indicates a particular location in the respective, e.g., the lower-right cross arm. Electrical transmission towers 510A-510E are just one example of an object that may be depicted in images 500A-500E. In some examples, images 500A-500E may depict an object such as a building, a dam, a solar panel array, a wind turbine, a monument, a bridge, a levee, a seawall, a pier, an antenna, a volcano, a pump station, an agricultural area, or another type of artificial or natural structure.

A user may create annotations 520A-520D by selecting a location on images 500A-500E using input device 142 or 182. Processing circuitry 120 and 160 may be configured to determine that a user has selected a particular location on images 500A-500E or that the user has drawn a box around an area on images 500A-500E based on user inputs 144 or 184 received by input devices 142 or 182. Processing circuitry 120 and 160 may also be configured to determine that the user has selected a specific type of annotation, a color or shading of highlighting, and/or a level of zoom based on user inputs 144 or 184. Processing circuitry 120 and 160 can also determine text characters (e.g., FIG. 5D) based on user inputs 144 and 184. Processing circuitry 120 and 160 are configured to present images 500A-500E and annotations 520A-520D via display 140 or 180.

Annotation 520A is an indication of a location on image 500A. As shown in FIG. 5A, annotation 520A includes a rectangular box around the lower-right cross arm of electrical transmission tower 510A. As shown in FIG. 5B, annotation 520B is an indication of a location including highlighting and/or shading of an area around the lower-right cross arm of electrical transmission tower 510B. As shown in FIG. 5C, annotation 520C is an indication of a location including an arrow pointing towards the lower-right cross arm of electrical transmission tower 510C. As shown in FIG. 5D, annotation 520D is an indication of a location including a text message ("ELEMENT 1") near the lower-right cross arm of electrical transmission tower 510D. As shown in FIG. 5E, image 500E includes a zoomed-in version of images 500A-500D, where the zoomed-in version includes the lower-right cross arm of electrical transmission tower 510E. An annotation, as described herein, may include a zoomed-in version of an image (e.g., image 500E).

Processing circuitry 120 and 160 may be configured to present annotations 520A-520D and zoomed-in image 500E. For example, processing circuitry 120 and 160 may be configured to present an indication of a location on an image by at least presenting, via display 140 or 180, markings, circles, rectangles, or other shapes, highlighting, arrows, text, and/or any other annotations on the one or more images.

When processing circuitry 120 and/or 160 transmits an annotation as data signals 106 or stores an annotation to memory 146 and/or 186, processing circuitry 120 and/or data associated with the annotation, such as the location of the annotation on the image. Processing circuitry 120 and/or 160 may also transmit or store the size, shape, font size, color, brightness, translucence, direction, orientation, angle, center, starting point, ending point, and/or any other details of the annotation. For a zoomed-in annotation, processing circuitry 120 and/or 160 may store and/or transmit data regarding the portion of the image that is included in the zoomed-in version of the image.

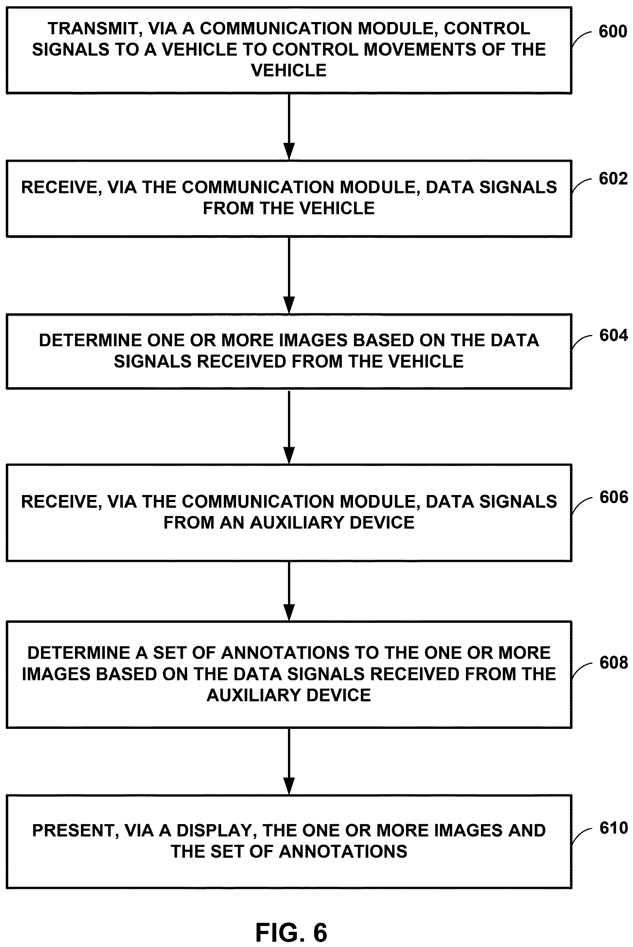

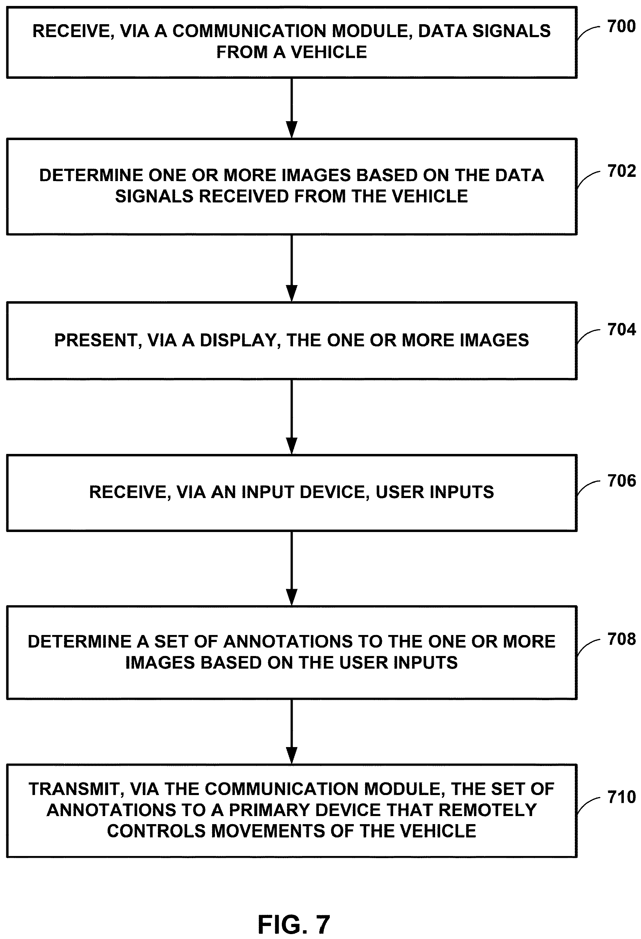

FIGS. 6 and 7 are flow diagrams illustrating the transmission of annotations between a primary device and an auxiliary device, in accordance with a technique of this disclosure. Although FIGS. 6 and 7 are described with respect to processing circuitry 120 and 160 of devices 110 and 150 (FIG. 1), in other examples, devices 210, 212, and/or 250 (FIG. 2), alone or in combination with processing circuitry 120 and 160, may perform any part of the techniques of FIGS. 6 and 7.

In the example of FIG. 6, processing circuitry 120 transmits, via communication module 130, control signals 132 to vehicle 100 to control movements of vehicle 100 (600). The user may provide user inputs 144 to input device 142, where user inputs 144 indicate locations, directions, and/or speeds of movement for vehicle 100. Processing circuitry 120 may determine the locations, directions, and/or speeds based on user inputs 144 and cause communication module 130 to transmit control signals 132 indicating the locations, directions, and/or speeds.

In the example of FIG. 6, processing circuitry 120 receives, via communication module 130, data signals 102 from vehicle 100 (602). Processing circuitry 120 then determines one or more images based on data signals 102 received, via communication module 130, from vehicle 100 (604). Processing circuitry 120 also receives, via communication module 130, data signals 106 from communication module 170 of auxiliary device 150 (606). In some examples, processing circuitry 120 is configured to receive, via communication module 130, data signals from a second auxiliary device, where the data signals indicate a second set of auxiliary annotations.

Processing circuitry 120 then determines a set of annotations to the one or more images based on data signals 106 received, via communication module 130, from auxiliary device 150 (608). Data signals 106 may include the annotation as part of a file containing an image, where the annotation modifies or overlays the image. Alternatively, data signals 106 may include the annotation in a standalone file that refers to the image by the filename of the image, the timestamp of the image, the frame number of the image, and/or any other indication of the image.

The set of annotations may include markings, highlighting, arrows, text, and/or zoomed-in versions of the one or more images. If there is more than one auxiliary device, processing circuitry 120 may be configured to determine a second set of auxiliary annotations based on data signals received from a second auxiliary device. Processing circuitry 120 may also be configured to transmit a primary set of annotations to two or more auxiliary devices. Processing circuitry 120 may determine the one or more images and the set of annotations based on signals 102 and 106 in real time. As used herein, "real time" means that processing circuitry 120 determines the images and the annotations during a single session (e.g., an inspection), such that both of devices 110 and 150 receive the image data, processing circuitry 160 determines and transmits the annotations to primary device 110 within one minute, ten minutes, thirty minutes, one hour, two hours, or any other suitable timeframe. It may not be necessary to store the images until the subject-matter expert can view the images at a later date because the subject-matter expert can view the images on display 180 in real time, create annotations, and cause auxiliary device 150 to transmit the annotations to primary device 110 in real time.

In the example of FIG. 6, processing circuitry 120 presents, via display 140, the one or more images and the set of annotations (610). Display 140 may present the set of annotations as a layer on top of the one or more images. The set of annotations may indicate a location to the user of primary device 110. Processing circuitry 120 may be configured to present the set of annotations by presenting an indication of the location, a circle or other shape around the location, highlighting on the location, an arrow pointing towards the location, text, and/or a zoomed-in version of an image showing the location.

In the example of FIG. 7, processing circuitry 160 receives, via communication module 170, data signals 104 from vehicle 100 (700). Processing circuitry 160 then determines one or more images based on data signals 104 received, via communication module 170, from vehicle 100 (702). In the example of FIG. 7, processing circuitry 160 presents, via display 180, the one or more images (704).

Processing circuitry 160 also receives, via input device 182, user inputs 184 (706). Processing circuitry 160 then determines a set of annotations to the one or more images based on user input 184 received from input device 182 (708). The set of annotations may include markings, highlighting, arrows, text, and/or zoomed-in versions of the one or more images. Processing circuitry 160 then transmits, via communication module 170, the set of annotations to primary device 110, where primary device 110 controls the movements of vehicle 100 (710).

The following numbered examples demonstrate one or more aspects of the disclosure.
Example 1. A primary device for remotely controlling movements of a vehicle includes a display and a communication module configured to transmit control signals to the vehicle to control the movements of the vehicle, receive data signals from the vehicle, and receive data signals from an auxiliary device. In some examples, the primary device also includes processing circuitry configured to determine one or more images based on the data signals received from the vehicle, determine a set of annotations to the one or more images based on the data signals received from the auxiliary device, and present, via the display, the one or more images and the set of annotations.
Example 2. The primary device of example 1, the set of annotations is a set of auxiliary annotations, the primary device further including an input device configured to receive user inputs, wherein the processing circuitry is further configured to determine a set of primary annotations to the one or more images based on the user inputs and cause the communication module to transmit the set of primary annotations to the auxiliary device.
Example 3. The primary device of examples 1-2 or any combination thereof, the processing circuitry is configured to determine the set of annotations by at least determining an indication of a location on the one or more images based on the data signals received from the auxiliary device, and wherein the processing circuitry is configured to present the indication of the location on the one or more images.
Example 4. The primary device of example 3, the processing circuitry is configured to present the one or more images and the set of annotations by at least presenting, via the display, a zoomed-in version of the one or more images including the indication of the location.
Example 5. The primary device of examples 3-4 or any combination thereof, the processing circuitry is configured to present the indication of the location by at least presenting, via the display, highlighting around the location on the one or more images.
Example 6. The primary device of examples 3-5 or any combination thereof, the processing circuitry is configured to present the indication of the location by at least presenting, via the display, an arrow pointing towards location on the one or more images.
Example 7. The primary device of examples 1-6 or any combination thereof, the processing circuitry is configured to determine the set of annotations by at least determining text based on the data signals received from the auxiliary device, and wherein the processing circuitry is configured to present, via the display, the text on the one or more images.
Example 8. The primary device of examples 1-7 or any combination thereof, the communication module includes a wireless receiver configured to receive the data signals from the auxiliary device.
Example 9. The primary device of examples 1-8 or any combination thereof, the primary device includes a mobile device.
Example 10. The primary device of examples 1-9 or any combination thereof, the auxiliary device is a first auxiliary device, the set of annotations is a first set of auxiliary annotations, and the communication module is further configured to receive data signals from a second auxiliary device. The processing circuitry is further configured to determine a second set of auxiliary annotations to the one or more images based on the data signals received from the second auxiliary device and present, via the display, the one or more images, the first set of auxiliary annotations, and the second set of auxiliary annotations.
Example 11. The primary device of example 10, further including an input device configured to receive user inputs, wherein the processing circuitry is further configured to determine a set of primary annotations to the one or more images based on the user inputs and cause the communication module to transmit the set of primary annotations to the first auxiliary device and to the second auxiliary device.
Example 12. The primary device of examples 1-11 or any combination thereof, the processing circuitry is configured to determine the one or more images and the set of annotations in real time.
Example 13. An auxiliary device for presenting images captured by a vehicle includes a display, a communication module configured to receive data signals from the vehicle, and processing circuitry configured to determine one or more images based on the data signals received from the vehicle and present, via the display, the one or more images. The auxiliary device also includes an input device configured to receive user inputs. The processing circuitry is further configured to determine a set of annotations to the one or more images based on the user inputs and cause the communication module to transmit the set of annotations to a primary device that remotely controls movements of the vehicle.
Example 14. The auxiliary device of example 13, the set of annotations is a set of auxiliary annotations, and the communication module is further configured to receive data signals from the primary device. The processing circuitry is further configured to determine a set of primary annotations to the one or more images based on the data signals received from the primary device and present, via the display, the one or more images and the set of primary annotations.
Example 15. The auxiliary device of examples 13-14 or any combination thereof, the processing circuitry is configured to determine the set of annotations by at least determining an indication of a location on the one or more images based on the user inputs, and wherein the processing circuitry is configured to cause the communication module to transmit the indication of the location to the primary device.
Example 16. The auxiliary device of examples 13-15 or any combination thereof, the processing circuitry is configured to determine the set of annotations by at least determining text based on the user inputs, and wherein the processing circuitry is configured to cause the communication module to transmit the text to the primary device.
Example 17. The auxiliary device of examples 13-16 or any combination thereof, wherein the auxiliary device includes a mobile device.
Example 18. The auxiliary device of examples 13-17 or any combination thereof, wherein the communication module comprises a wireless transmitter configured to transmit the set of annotations to the primary device.
Example 19. The auxiliary device of examples 13-18 or any combination thereof, wherein the processing circuitry is configured to determine the set of annotations to the one or more images in real time.
Example 20. A method for remotely controlling movements of a vehicle includes transmitting, by processing circuitry of a primary device and via a communication module of the primary device, control signals to the vehicle to control the movements of the vehicle. The method also includes receiving, by the processing circuitry and via the communication module, data signals from the vehicle and data signals from an auxiliary device. The method further includes determining, by the processing circuitry, one or more images based on the data signals received from the vehicle and determining, by the processing circuitry, a set of annotations to the one or more images based on the data signals received from the auxiliary device. The method includes presenting, by the processing circuitry and via a display of the primary device, the one or more images and the set of annotations.
Example 21. The method of example 20, the set of annotations is a set of auxiliary annotations, further including receiving user inputs, determining a set of primary annotations to the one or more images based on the user inputs, and transmitting the set of primary annotations to the auxiliary device.
Example 22. The method of examples 20-21 or any combination thereof, further including determining the set of annotations includes determining an indication of a location on the one or more images based on the data signals received from the auxiliary device. Presenting the one or more images and the set of annotations includes presenting, via the display, the indication of the location on the one or more images.
Example 23. The method of examples 20-22 or any combination thereof, further including determining the set of annotations includes determining text based on the data signals received from the auxiliary device. Presenting, the one or more images and the set of annotations includes presenting, via the display, the text on the one or more images.
Example 24. A method for presenting images captured by a vehicle includes receiving, by processing circuitry of an auxiliary device and from a communication module of the auxiliary device, data signals from the vehicle. The method further includes determining, by the processing circuitry, one or more images based on the data signals received from the vehicle and presenting, by the processing circuitry and via a display of the auxiliary device, the one or more images. The method also includes receiving, by the processing circuitry and from an input device of the auxiliary device, user inputs and determining, by the processing circuitry, a set of annotations to the one or more images based on the user inputs. The method includes causing, by the processing circuitry, the communication module to transmit the set of annotations to a primary device that remotely controls movements of the vehicle.
Example 25. The method of example 24, further including receiving data signals from the primary device, determining a set of primary annotations to the one or more images based on the data signals received from the primary device, and presenting, via the display, the one or more images and the set of primary annotations.

The disclosure contemplates computer-readable storage media comprising instructions to cause a processor to perform any of the functions and techniques described herein. The computer-readable storage media may take the example form of any volatile, non-volatile, magnetic, optical, or electrical media, such as a RAM, ROM, NVRAM, EEPROM, or flash memory. The computer-readable storage media may be referred to as non-transitory. A programmer, such as patient programmer or clinician programmer, or other computing device may also contain a more portable removable memory type to enable easy data transfer or offline data analysis.

The techniques described in this disclosure, including those attributed to vehicles 100 and 200, devices 110, 150, 210, 212, 250, processing circuitry 110, 160, 302, and 400, memories 146, 186, 304, and 404, displays 140, 180, and 408, input devices 142 and 182, navigation system 310, communication modules 130 and 170, transceivers 306 and 406, and various constituent components, may be implemented, at least in part, in hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components, embodied in programmers, such as physician or patient programmers, stimulators, remote servers, or other devices. The term "processor" or "processing circuitry" may generally refer to any of the foregoing logic circuitry, alone or in combination with other logic circuitry, or any other equivalent circuitry.

As used herein, the term "circuitry" refers to an ASIC, an electronic circuit, a processor (shared, dedicated, or group) and memory that execute one or more software or firmware programs, a combinational logic circuit, or other suitable components that provide the described functionality. The term "processing circuitry" refers one or more processors distributed across one or more devices. For example, "processing circuitry" can include a single processor or multiple processors on a device. "Processing circuitry" can also include processors on multiple devices, wherein the operations described herein may be distributed across the processors and devices.

Such hardware, software, firmware may be implemented within the same device or within separate devices to support the various operations and functions described in this disclosure. For example, any of the techniques or processes described herein may be performed within one device or at least partially distributed amongst two or more devices, such as between vehicles 100 and 200, devices 110, 150, 210, 212, 250, processing circuitry 110, 160, 302, and 400, memories 146, 186, 304, and 404, displays 140, 180, and 408, input devices 142 and 182, navigation system 310, communication modules 130 and 170, and transceivers 306 and 406. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in an article of manufacture including a non-transitory computer-readable storage medium encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors. Example non-transitory computer-readable storage media may include RAM, ROM, programmable ROM (PROM), EPROM, EEPROM, flash memory, a hard disk, a compact disc ROM (CD-ROM), a floppy disk, a cassette, magnetic media, optical media, or any other computer readable storage devices or tangible computer readable media.

In some examples, a computer-readable storage medium comprises non-transitory medium. The term "non-transitory" may indicate that the storage medium is not embodied in a carrier wave or a propagated signal. In certain examples, a non-transitory storage medium may store data that can, over time, change (e.g., in RAM or cache). Elements of devices and circuitry described herein, including, but not limited to, vehicles 100 and 200, devices 110, 150, 210, 212, 250, processing circuitry 110, 160, 302, and 400, memories 146, 186, 304, and 404, displays 140, 180, and 408, input devices 142 and 182, navigation system 310, communication modules 130 and 170, and transceivers 306 and 406 may be programmed with various forms of software. The one or more processors may be implemented at least in part as, or include, one or more executable applications, application modules, libraries, classes, methods, objects, routines, subroutines, firmware, and/or embedded code, for example.

Various examples have been described. These and other examples are within the scope of the following claims.

## Claims

1. An auxiliary device for presenting images captured by a vehicle, the auxiliary device comprising:
a display;
a communication module configured to receive data signals from the vehicle;
processing circuitry configured to:
determine one or more images based on the data signals received from the vehicle; and
present, via the display, the one or more images; and
an input device configured to receive user inputs,
wherein the processing circuitry is further configured to:
determine a set of annotations to the one or more images based on the user inputs; and
cause the communication module to transmit the set of annotations to a primary device that remotely controls movements of the vehicle.

2. The auxiliary device of claim 1,
wherein the set of annotations is a set of auxiliary annotations,
wherein the communication module is further configured to receive data signals from the primary device, and
wherein the processing circuitry is further configured to:
determine a set of primary annotations to the one or more images based on the data signals received from the primary device; and
present, via the display, the one or more images and the set of primary annotations.

3. The auxiliary device of claim 1, wherein the processing circuitry is configured to determine the set of annotations by at least determining an indication of a location on the one or more images based on the user inputs, and wherein the processing circuitry is configured to cause the communication module to transmit the indication of the location to the primary device.

4. The auxiliary device of claim 3, wherein the processing circuitry is configured to determine the indication of the location by at least determining a zoomed-in version of the one or more images.

5. The auxiliary device of claim 3, wherein the processing circuitry is configured to determine the indication of the location by at least determining highlighting around the location on the one or more images.

6. The auxiliary device of claim 3, wherein the processing circuitry is configured to determine the indication of the location by at least determining an arrow pointing towards location on the one or more images.

7. The auxiliary device of claim 1, wherein the processing circuitry is configured to determine the set of annotations by at least determining text based on the user inputs, and wherein the processing circuitry is configured to cause the communication module to transmit the text to the primary device.

8. A method for presenting images captured by a vehicle, the method comprising:
receiving, by processing circuitry of an auxiliary device and from a communication module of the auxiliary device, data signals from the vehicle;
determining, by the processing circuitry, one or more images based on the data signals received from the vehicle;
presenting, by the processing circuitry and via a display of the auxiliary device, the one or more images;
receiving, by the processing circuitry and from an input device of the auxiliary device, user inputs;
determining, by the processing circuitry, a set of annotations to the one or more images based on the user inputs; and
causing, by the processing circuitry, the communication module to transmit the set of annotations to a primary device that remotely controls movements of the vehicle.

9. The method of claim 8, wherein the set of annotations is a set of auxiliary annotations, the method further comprising:
receiving data signals from the primary device;
determining a set of primary annotations to the one or more images based on the data signals received from the primary device; and
presenting, via the display, the one or more images and the set of primary annotations.

10. The method of claim 8, wherein determining the set of annotations comprises determining an indication of a location on the one or more images based on the user inputs, and wherein the processing circuitry is configured to cause the communication module to transmit the indication of the location to the primary device.
